# FASCICULE DE BREVET EUROPEEN

(11) **EP 4 008 573 B1**
(45) Date de publication et mention de la délivrance du brevet: **11.10.2023**
(21) Numéro de dépôt: 20211130.8
(22) Date de dépôt: 01.12.2020
(51) Int. Cl.: B60H 1/00, F04D 29/42, F16B 5/00, F16J 15/06, F16J 15/10, F04D 29/08

(54) **SYSTÈME DE VENTILATION, DE CHAUFFAGE ET/OU D'AIR CONDITIONNÉ D'UN VÉHICULE AUTOMOBILE**
LÜFTUNGS-, HEIZUNGS- UND/ODER KLIMAANLAGE EINES KRAFTFAHRZEUGS
VENTILATION, HEATING AND/OR AIR CONDITIONING SYSTEM OF A MOTOR VEHICLE

(43) Date de publication de la demande: 08.06.2022
(73) Titulaire: Valeo Termico S.A., 50011 Zaragoza (ES)
(72) Inventeur: MORENO, Guillem, 50011 ZARAGOZA (ES); PELISSOU, Olivier, 50011 ZARAGOZA (ES)
(74) Mandataire: Valeo Systèmes Thermiques

(56) Documents cités:
- EP-A1- 2 607 118
- DE-U1-202017 102 919
- US-A- 5 954 578
- US-A1- 2005 047 853
- US-A1- 2011 017 742

## Description

La présente invention s'inscrit dans le domaine des systèmes de ventilation, de chauffage et/ou d'air conditionné pour un véhicule automobile, et plus particulièrement d'un dispositif d'étanchéité d'un tel système de ventilation, de chauffage et/ou d'air conditionné. Le domaine s'étend à tout composant ou volume d'un tel véhicule, voire à tout domaine dont un des composants nécessite d'être traité thermiquement.

Les systèmes de ventilation, de chauffage et/ou d'air conditionné qui équipent les véhicules automobiles permettent aux utilisateurs du véhicule de commander un apport d'air froid ou d'air chaud en différentes zones du véhicule, notamment son habitacle ou son pack de batteries. De tels systèmes de ventilation, de chauffage et/ou d'air conditionné comprennent généralement un organe de ventilation et plusieurs éléments assurant le refroidissement et/ou le chauffage d'un flux d'air mis en circulation par l'organe de ventilation. L'utilisateur du véhicule automobile peut ainsi choisir de refroidir ou chauffer l'air mis en circulation par l'organe de ventilation pour augmenter ou diminuer la température au sein de l'habitacle ou du composant.

De nos jours, il est courant d'installer l'organe de ventilation dans un boîtier qui délivre un flux d'air propulsé à travers le système de ventilation, de chauffage et/ou d'air conditionné vers l'habitacle du véhicule automobile. Classiquement, le système de ventilation, de chauffage et/ou d'air conditionné comprend un boîtier en deux parties coopérant l'une avec l'autre en vue de délimiter un volume interne du système de ventilation, de chauffage et/ou d'air conditionné. Généralement, c'est dans ce volume interne qu'est disposé l'organe de ventilation.

Le système de ventilation, de chauffage et/ou d'air conditionné comprend un dispositif d'étanchéité rendant le volume interne étanche à l'environnement extérieur du boîtier au moins au niveau de la liaison entre les deux parties du boîtier. Il est connu que ce dispositif d'étanchéité soit formé par une coopération entre une rainure disposée sur l'une des deux parties constitutives du boîtier, une nervure disposée sur l'autre partie constitutive du boîtier et un élément d'étanchéité, comme un joint, disposé dans le fond de la rainure par exemple. Lors de l'assemblage des deux parties du boîtier entre elles, la nervure se loge dans la rainure et comprime le joint dans le fond de la rainure, rendant ainsi la liaison entre les deux parties du boîtier étanche.

Cependant, un tel dispositif d'étanchéité nécessite un élément d'étanchéité en plus de la coopération entre la rainure et la nervure afin de former rendre étanche le volume interne. Cet élément supplémentaire rajoute une étape lors du montage du système de ventilation, de chauffage et/ou d'air conditionné, entraînant un coût et du temps supplémentaires lors du montage de tel système.

Le dispositif d'étanchéité du document US 2005/047853 A1 est formé par une coopération entre une rainure comprenant des bossages et une langue déformable grâce à une fente entre ses deux arêtes.

Dans ce contexte, la présente invention est une amélioration des solutions déjà existantes et propose un boîtier dont l'étanchéité assurée par le dispositif d'étanchéité est réalisée uniquement grâce à la coopération entre la nervure et la rainure, sans avoir besoin d'ajouter un élément supplémentaire, tel qu'un joint.

La présente invention, définie dans la revendication 1, a ainsi pour principal objet un système de ventilation comprenant au moins un premier boîtier et un deuxième boîtier coopérant avec le premier boîtier pour délimiter un volume interne du système de ventilation, ce dernier comprenant au moins dispositif d'étanchéité entre le premier boîtier et le deuxième boîtier, au moins l'un des boîtiers comprend une paroi présentant un bord périphérique qui délimite au moins une rainure constitutive du dispositif d'étanchéité, le bord périphérique comprend au moins un bossage s'étendant vers l'intérieur de la rainure.

La rainure est constitutive du dispositif d'étanchéité et est configurée pour coopérer avec une nervure afin d'assurer une étanchéité entre le volume interne délimité par les boîtiers et l'environnement extérieur du système de ventilation, de chauffage et/ou d'air conditionné. La rainure est une gorge réalisée au niveau du bord périphérique du boîtier, cette rainure s'étendant périphériquement le long de ce bord.

Le dispositif d'étanchéité est tout particulièrement adapté pour assurer une étanchéité aux liquides.

Le terme bossage vise une saillie, de forme avantageusement courbée, réduisant une largeur de la rainure, cette dimension étant mesurée le long d'une direction perpendiculaire au plan d'extension principal de la paroi présentant le bord périphérique.

Selon une caractéristique optionnelle de l'invention, le bord périphérique comprend un premier bossage et un deuxième bossage s'étendant vers l'intérieur de la rainure l'un en direction de l'autre.

La rainure est délimitée par deux flancs d'appui porteur du premier et du deuxième bossages. Ces derniers font saillies chacun depuis ces flancs d'appui l'un en direction de l'autre. Avantageusement, ils sont tous deux disposés à une distance identique, ou sensiblement identique, d'un fond de la rainure.

Selon l'invention, le premier boîtier comprend la rainure tandis que le deuxième boîtier comprend une paroi présentant un flanc périphérique duquel fait saillie une nervure configurée pour se loger dans la rainure du premier boîtier.

La nervure est également constitutive du dispositif d'étanchéité et comprend une face de contact interne orientée vers le volume interne délimité par les boîtiers et une face de contact externe orientée vers l'environnement extérieur du système de ventilation, de chauffage et/ou d'air conditionné. De la sorte, les faces de contact sont en contact avec les bossages de la rainure lorsque les boîtiers coopèrent l'un avec l'autre. Ces contacts participent à assurer une étanchéité entre le volume interne délimité par les boîtiers et l'environnement extérieur du système de ventilation, de chauffage et/ou d'air conditionné, en exerçant un effort sur la nervure qui tend à déformer celle-ci.

Selon une autre caractéristique optionnelle de l'invention, la nervure comprend au moins partiellement un matériau élastiquement déformable.

On entend par « élastiquement déformable », un matériau configuré pour se déformer dans le domaine élastique du matériau. Cette déformabilité du matériau qui couvre ou qui constitue au moins partiellement la nervure permet à la matière compressée par le ou les bossages de se déplacer dans une partie haute de la rainure située au-dessus du ou des bossages.

Le matériau élastiquement déformable est par exemple un caoutchouc synthétique, de type éthylène-propylène-diène monomère (EPDM) ou de type butadiène nitrile acrylique (NBR pour « nitril butadien rubber » en anglais), cette liste n'étant pas exhaustive.

Selon une autre caractéristique optionnelle de l'invention, la nervure comprend au moins une tétine issue de matière avec le deuxième boîtier, la matière du deuxième boîtier présentant un module de Young supérieur à celui du matériau élastiquement déformable.

La tétine a pour fonction d'apporter une certaine rigidité à la nervure, favorisant ainsi le maintien de la forme de la nervure. La tétine, ainsi qu'avantageusement les premier et deuxième boîtiers, sont principalement composés de polyamide (PA66) qui peut être renforcé en fibres de verre de 30 à 60% (GF30 ou GF60).

Par « module de Young » on comprend que la tétine présente un seuil de déformation, qui correspond à une valeur d'effort à partir de laquelle le matériau est susceptible de se déformer, ce seuil de déformation du matériau constituant la tétine étant plus important que celui du matériau élastiquement déformable de la nervure. En d'autres termes, une force plus importante sera nécessaire pour déformer la tétine comparativement à la force nécessaire pour déformer le matériau élastiquement déformable, toute chose étant égale par ailleurs.

Selon une autre caractéristique optionnelle de l'invention, la nervure est intégralement composée d'un matériau élastiquement déformable.

On comprend que dans ce mode de réalisation particulier, l'ensemble de la nervure est composé de matériau élastiquement déformable, ce matériau élastiquement déformable s'étendant ainsi depuis le flanc périphérique jusqu'à l'extrémité de la nervure.

Selon l'invention, la nervure présente une première largeur mesurée le long d'une ligne de référence quand la nervure est hors de la rainure, ladite nervure présente une seconde largeur mesurée le long de la même ligne de référence quand la nervure est disposée dans la rainure, la seconde largeur étant inférieure à la première largeur.

La largeur est, pour rappel, mesurée perpendiculairement à l'axe le long duquel s'étend la nervure et/ou la rainure. Cette largeur est réduite lorsque la nervure coopère avec la rainure comparativement à une largeur mesurée lorsque la nervure est dans un état initial, c'est-à-dire lorsqu'elle est disposée hors de la rainure. On comprend ici qu'une largeur de la nervure se réduit lorsque la nervure coopère avec la rainure par rapport au moment où la nervure est hors de la rainure.

Lors du montage des boîtiers l'un sur l'autre, la nervure entre en contact avec le bord périphérique de la rainure avant de toucher un fond de la rainure. Ce contact tend ainsi à réduire la largeur de la nervure en la comprimant lorsque celle-ci est poussée vers le fond de la rainure.

De préférence, la nervure s'étend au moins en partie sur un pourtour de l'un des boîtiers. On comprend de cela que la nervure s'étend linéairement et au moins partiellement sur le pourtour d'un des boîtiers coopérant avec l'autre boîtier.

Avantageusement, la nervure s'étend de manière continue sur l'ensemble du pourtour de l'un des boîtiers et forme ainsi une boucle.

Dans cette configuration, le pourtour du boîtier peut prendre une forme circulaire, une forme rectangulaire voire même une forme plus complexe, la nervure s'étendant linéairement sur pourtour de l'un des boîtiers en suivant la forme prise par le pourtour.

Selon un mode de réalisation ne faisant pas partie de l'invention, une face interne du bord périphérique porte une couche d'un matériau élastiquement déformable, la couche formant le bossage qui s'étend vers l'intérieur de la rainure.

Ce mode de réalisation particulier est une alternative au premier mode de réalisation et atteint le même résultat mais avec des moyens différents. Selon cette alternative, c'est la couche qui se trouve compressée par la nervure, la matière élastiquement déformable se déplaçant vers un espace situé au-dessus du ou des bossages.

On comprend par ailleurs par « face interne » la face du bord périphérique située en dessous de la couche, constituant la face du bord périphérique orientant vers l'intérieur de la rainure.

On comprend que la nervure est alors composée dans son intégralité du même matériau que celui du boîtier.

De préférence, le premier boîtier est solidaire du deuxième boîtier, ce dernier étant rendu solidaire du premier boîtier par vissage ou par clipsage. Selon l'invention, l'un quelconque du premier ou deuxième boîtier est porteur d'un moteur de ventilation d'un organe de ventilation constitutif du système de ventilation, de chauffage et/ou d'air conditionné. Dans un tel cas, le boîtier porteur du moteur de ventilation est un support moteur de l'organe de ventilation, un tel support étant rapporté sur le boîtier. L'invention a également pour objet un véhicule comprenant un système de ventilation, de chauffage et/ou d'air conditionné selon l'une quelconque des revendications précédentes, le système de ventilation, de chauffage et/ou d'air conditionné étant configuré pour traiter thermiquement un flux d'air envoyer vers l'habitacle et/ou vers un composant du véhicule dans le but de refroidir ou de chauffer l'habitacle et/ou le composant du véhicule.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est représenté un système de ventilation, de chauffage et/ou d'air conditionné selon un premier mode de réalisation de l'invention ;
[Fig. 2] est représenté un système de ventilation, de chauffage et/ou d'air conditionné selon un deuxième mode de réalisation de l'invention ;
[Fig. 3] est représentée une vue de détail en coupe du système de ventilation, de chauffage et/ou d'air conditionné selon la figure 1, dans lequel une nervure n'est pas en contact de faces qui délimitent une rainure du système de ventilation, de chauffage et/ou d'air conditionné ;
[Fig. 4] est représentée une vue de détail en coupe du système de ventilation, de chauffage et/ou d'air conditionné selon la figure 1, dans lequel une nervure est logée dans une rainure du système de ventilation, de chauffage et/ou d'air conditionné, et au contact de celle-ci ;
[Fig. 5] est représentée une vue de détail en coupe du système de ventilation, de chauffage et/ou d'air conditionné selon la figure 1, dans lequel une nervure est logée dans une rainure selon un autre mode de réalisation illustratif du système de ventilation, de chauffage et/ou d'air conditionné, et au contact de celle-ci.

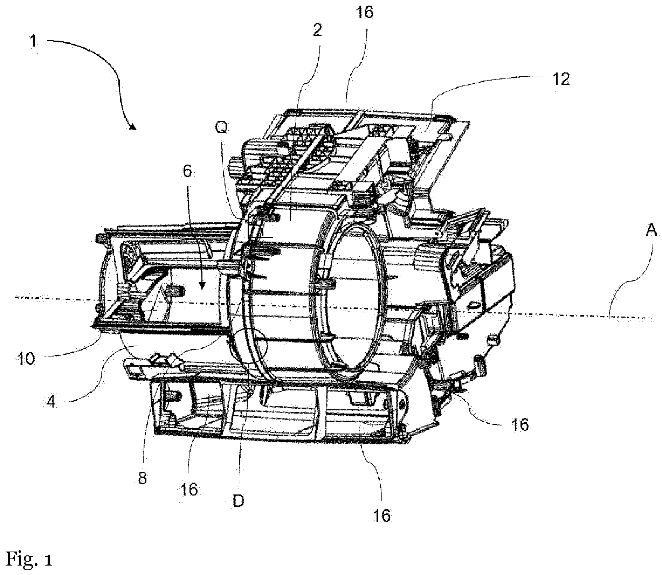

Sur la figure 1 est représenté un système de ventilation 1 configuré pour être installé sur un véhicule automobile. Le système de ventilation peut générer une fonction de chauffage et/ou une fonction de climatisation, comme c'est le cas du système illustré sur la figure 1. Un tel système de ventilation, de chauffage et/ou d'air conditionné 1 traite thermiquement un flux d'air envoyer vers l'habitacle et/ou vers un composant du véhicule lorsque le conducteur, un passager ou une fonction du véhicule le demande, ce flux d'air pouvant être refroidi ou chauffé et participer ainsi à refroidir ou chauffer l'habitacle et/ou le composant du véhicule.

Un tel système de ventilation, de chauffage et/ou d'air conditionné 1 est ainsi configuré pour envoyer ce flux d'air vers un autre compartiment du véhicule que l'habitacle, tel que par exemple un pack de batteries de propulsion du véhicule ou un compartiment moteur du véhicule, sans pour autant sortir du cadre de l'invention. En tout état de cause, l'invention trouve application dès lors que le système de ventilation, de chauffage et/ou d'air conditionné 1 est soumis à des projections liquide provenant d'un environnement extérieur à ce système.

Le système de ventilation, de chauffage et/ou d'air conditionné 1 comprend un premier boîtier 2 et un deuxième boîtier 4 coopérant avec le premier boîtier 2 pour délimiter un volume interne 6 configuré pour loger au moins un organe de ventilation. Bien entendu, d'autres composants comme au moins un échangeur de chaleur, un filtre, des volets de répartition ou de mixage peuvent être disposés dans le volume interne 6, sans sortir du cadre de l'invention. Le premier boîtier 2 et le deuxième boîtier 4 sont rendus solidaires l'un de l'autre par des moyens de fixation 8, comme des vis par exemple. Le volume interne forme un circuit de guidage d'un flux d'air mis en circulation par l'organe de ventilation à travers le système de ventilation, de chauffage et/ou d'air conditionné 1, les boîtiers 2, 4 étant constitutif du circuit de guidage.

L'un quelconque du premier ou du deuxième boîtier 2, 4 est porteur d'un moteur de ventilation de l'organe de ventilation constitutif du système de ventilation, de chauffage et/ou d'air conditionné 1. Le volume interne 6 est ainsi configuré pour pouvoir au moins loger d'une part une hélice de l'organe de ventilation et d'autre part le moteur de ventilation dudit organe.

Le système de ventilation, de chauffage et/ou de ventilation 1 comprend également une structure de guidage 12 définissant un chemin de circulation du flux d'air et comprenant au moins une entrée d'air 10 disposée au niveau du deuxième boîtier 4 et une pluralité de sorties d'air 16 s'étendant ici à l'extérieur et le long des boîtiers 2, 4. Le volume interne 6 communique ainsi aérauliquement avec les sorties d'air 16 de la structure de guidage 12.

Sur la figure 1 est représenté le système de ventilation, de chauffage et/ou d'air conditionné 1 selon un premier mode de réalisation, où les boîtiers 2, 4 sont de forme complexe. Les boîtiers 2, 4 s'étendent longitudinalement le long d'un premier axe A, la sortie d'air 16 de la structure de guidage 12 s'étendant aussi principalement le long du premier axe A. Cependant, le volume interne 6 délimité par les boîtiers 2, 4 prend globalement une forme cylindrique configuré pour accueillir l'organe de ventilation. Tel qu'illustré ici, le premier boîtier 2 comprend une ouverture 18 formant une volute globalement de forme circulaire par laquelle l'organe de ventilation passe pour être installée dans le volume interne 6.

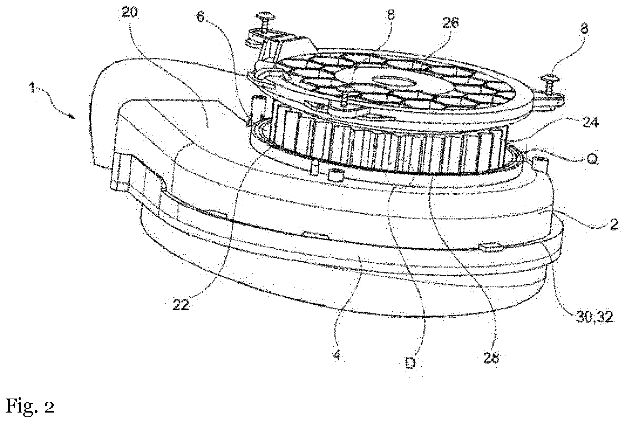

Sur la figure 2 est représenté le système de ventilation 1 selon un deuxième mode de réalisation, où le premier boîtier 2 et le deuxième boîtier 4 forme un ensemble de forme globalement cylindrique dont la principale dimension d'extension est mesurée le long d'un axe perpendiculaire à un axe de rotation B de l'hélice de l'organe de ventilation. Autrement dit, la dimension des boîtiers 2, 4 mesurée le long du premier axe A est moins importante que le diamètre du cylindre.

Tel qu'illustré sur la figure 2, au moins l'un des boîtiers 2, 4 comprend une ouverture 18, avantageusement disposée au niveau d'une face discoïde 20, par laquelle l'organe de ventilation 24 passe lors de son installation dans le volume interne 6 délimité par les boîtiers 2, 4. Plus précisément, le système de ventilation 1 comprend un support 26 du moteur de l'organe de ventilation configuré pour coopérer avec le boîtier 2, 4 comprenant l'ouverture 18, le support 26 recouvrant l'ouverture 18 une fois installée sur ledit boîtier 2, 4. Selon l'exemple illustré ici sur la figure 2, le support 26 porte également l'organe de ventilation, ici de référence 24, c'est-à-dire que le support 26 est solidaire de l'organe de ventilation 24. Le support 26 est ici rendu solidaire du boîtier 2, 4 portant l'ouverture 18 par des moyens de fixation 8 réversible tel que des vis.

Selon l'invention, le système de ventilation 1 comprend au moins un dispositif d'étanchéité 28 entre le premier boîtier 2 et le deuxième boîtier 4, empêchant tout passage de fluide entre le volume interne 6 défini par les boîtiers 2, 4 et l'environnement extérieur du système de ventilation, de chauffage et/ou d'air conditionné 1. Ce dispositif d'étanchéité 28 peut également être mis en oeuvre au niveau de la connexion entre le support 26 et le boîtier 2, 4 portant l'ouverture 18.

Le premier boîtier 2 comprend une paroi 29 présentant un bord périphérique 30, le deuxième boîtier 4 comportant une paroi 31 présentant un flanc périphérique 32 en regard du bord périphérique 30 du premier boîtier 2, lorsque les boîtiers 2, 4 coopèrent l'un avec l'autre.

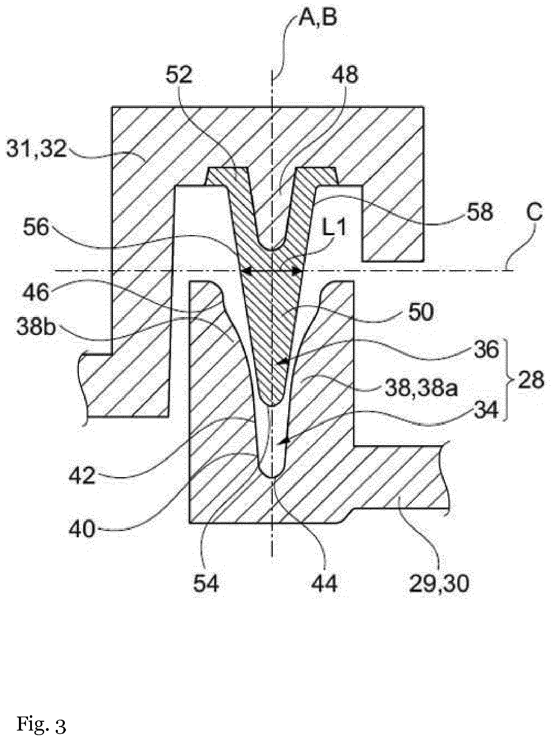

Comme plus particulièrement visible sur la figure 3 qui est une vue de détail D en coupe de la figure 2, le bord périphérique 30 comprend une rainure 34 constitutive du dispositif d'étanchéité 28 du système de ventilation, de chauffage et/ou d'air conditionné 1. Le deuxième boîtier 4 comprend quant à lui une nervure 36 faisant saillie du flanc périphérique 32 et qui est configurée pour coopérer avec la rainure 34 de sorte à rendre étanche à la liaison entre le premier boîtier 2 et le deuxième boîtier 4, cette nervure 36 étant également constitutive du dispositif d'étanchéité 28.

Selon l'invention, le bord périphérique 30 du premier boîtier 2 comprend au moins un bossage 38 s'étendant vers l'intérieur de la rainure 34. Plus précisément, le bord périphérique 30 comprend une face interne 40 définissant la rainure 34. La face interne 40 du bord périphérique 30 prend la forme d'un « V » dans le bord périphérique 30 selon une coupe dans un plan dans lequel s'inscrit le premier axe A ou l'axe de rotation B et un axe s'étendant radialement par rapport aux boîtiers 2, 4. La face interne 40 comprend ainsi deux flancs d'appui 42 et un fond de rainure 44, les flancs d'appui 42 s'étendant depuis le fond de rainure 44 jusqu'à une bouche d'entrée 46 de la rainure 34. Le bossage 38 du bord périphérique 30 est disposé sur l'un des flancs d'appui 42 de la rainure 34, entre la bouche d'entrée 46 et le fond de rainure 44.

Par ailleurs, on comprend par « vers l'intérieur » que le bossage 38 s'étend depuis l'un des flancs d'appui 42 du bord périphérique 30 vers l'autre flanc d'appui 42, dans l'espace formant la rainure 34. Autrement dit et tel que visible sur la figure 3, le bossage 38 est une contre forme qui diminue une largeur de la rainure 34 mesurée entre les deux flancs d'appui 42, au fur et à mesure qu'on se rapproche du fond de rainure 44. En d'autres termes, la dimension mesurée entre les deux flancs d'appui 42 au fond de rainure 44 est inférieure à la dimension mesurée entre les deux flancs d'appui 42 au niveau du sommet du bossage 38, cette dernière mesure étant également inférieure à la dimension mesurée entre les deux flancs d'appui 42 au niveau de la bouche d'entrée 46.

Dans la suite de la description, une hauteur est mesurée le long du premier axe A ou de l'axe de rotation B, alors qu'une largeur est mesurée le long d'un axe perpendiculaire au premier axe A ou à l'axe de rotation B et s'étendant dans le plan de coupe Q illustré sur la figure 1 et 2.

Tel qu'illustré sur la figure 3, le bord périphérique 30 comprend un premier bossage 38a et un deuxième bossage 38b s'étendant chacun vers l'intérieur de la rainure 34 l'un en direction de l'autre. Le premier bossage 38a et le deuxième bossage 38b présentent une même forme et sont symétriques l'un par rapport à l'autre par rapport à un plan passant par le fond de rainure 44 et à équidistance de chacun des flancs d'appui 42 au niveau de la bouche d'entrée 46.

La dimension mesurée entre les deux flancs d'appui 42 au niveau du fond de rainure 44 est inférieure à la dimension mesurée entre les deux flancs d'appui 42 au niveau du sommet des premier et deuxième bossages 38a, 38b, cette dernière mesure étant également inférieure à la dimension mesurée entre les deux flancs d'appui 42 au niveau de la bouche d'entrée 46 de la rainure 34.

La nervure 36 du deuxième boîtier 4 est configurée pour se loger dans la rainure 34 du premier boîtier 2 et assurer une étanchéité entre l'environnement extérieur du système de ventilation, de chauffage et/ou d'air conditionné et le volume interne de ce système. Pour cela, la nervure 36 est au moins partiellement constituée d'un matériau élastiquement déformable. On entend par « élastiquement déformable », un matériau configuré pour reprendre une position initiale après avoir subi une déformation mécanique. Le matériau élastiquement déformable recouvrant la nervure 36 est par exemple un caoutchouc synthétique, de type éthylène-propylène-diène monomère (EPDM) ou de type butadiène nitrile acrylique (NBR pour « nitril butadien rubber » en anglais), cette liste n'étant pas exhaustive.

La nervure 36 comprend au moins une tétine 48 composée du même matériau que celui du deuxième boîtier 4, le matériau du deuxième boîtier 4 présentant un module de Young supérieur à celui du matériau élastiquement déformable. Par « module de Young » on comprend que la tétine 48 présente un seuil de déformation, qui correspond à une valeur d'effort à partir de laquelle le matériau est susceptible de se déformer, ce seuil de déformation du matériau constituant la tétine 48 étant plus important que celui du matériau élastiquement déformable de la nervure 36. En d'autres termes, une force plus importante sera nécessaire pour déformer la tétine 48 comparativement à la force nécessaire pour déformer le matériau élastiquement déformable, toute chose étant égale par ailleurs.

On comprend que le deuxième boîtier 4, et avantageusement le premier boîtier 2, est principalement composé de de polyamide (PA66) qui peut être renforcé en fibres de verre de 30 à 60% (GF30 ou GF60). Ce type de matériau est par définition plus rigide que le matériau élastiquement déformable constituant au moins partiellement la nervure 36.

Selon une alternative, la nervure 36 est intégralement composée d'un matériau élastiquement déformable. On comprend que la nervure 36 ne comprend pas de tétine 48 et qu'elle est composée d'un matériau différent de celui dont sont principalement composés le deuxième boîtier 4 et/ou le premier boîtier 2.

Tel qu'illustré sur les figures 3 à 4, la nervure 36 comprend un capuchon 50 composé de matériau élastiquement déformable et recouvrant entièrement la tétine 48. Plus particulièrement, le capuchon 50 est configuré pour être en contact avec la rainure 34 de manière à assurer une étanchéité au niveau de la liaison entre la nervure 36 et la rainure 34. Ce capuchon 50 prend la forme d'un « V » s'étirant depuis une base 52 disposée au niveau de la tétine 48 jusqu'à une extrémité libre 54 formant une pointe et configurée pour être en regard du fond de rainure 44, voire d'être en contact avec le fond de rainure 44. Par ailleurs, le capuchon 50 comprend une face de contact interne 56 et une face de contact externe 58 s'étendant entre l'extrémité 54 et la base 52 du capuchon 50, la face de contact interne 56 étant orientée vers le volume interne délimité par les premier et deuxièmes boîtiers, la face de contact externe 58 étant quant à elle orientée vers l'environnement extérieur des boîtiers.

Tel qu'illustré sur la figure 3, la nervure 36 présente une première largeur L1 mesurée le long d'une ligne de référence C qui est une direction radiale du boîtier 2, 4 s'étendant dans le plan de coupe Q et étant perpendiculaire au premier axe A ou à l'axe de rotation B.

On va maintenant décrire un montage des boîtiers l'un sur l'autre, en faisant notamment référence à la coopération entre la rainure 34 du premier boîtier et la nervure 36 du deuxième boîtier, en référence aux figures 3 à 5.

Pour s'assembler l'un avec l'autre, le premier boîtier 2 et le deuxième boîtier 4 sont rapprochés l'un de l'autre, ce mouvement se réalisant le long du premier axe A. Par ce mouvement, l'extrémité libre 54 du capuchon 50 de la nervure 36 se rapproche du fond de rainure 44, les faces de contact 56, 58 du capuchon 50 glissant le long des flancs d'appui 42 de la rainure 34. Au fur et à mesure que l'extrémité 54 du capuchon 50 se rapproche du fond de la nervure 36, au moins un bossage 38, et avantageusement des deux bossages 38, exercent une pression sur l'une des faces de contact 56, 58 du capuchon 50, et avantageusement sur chacune des faces de contact 56, 58 du capuchon 50.

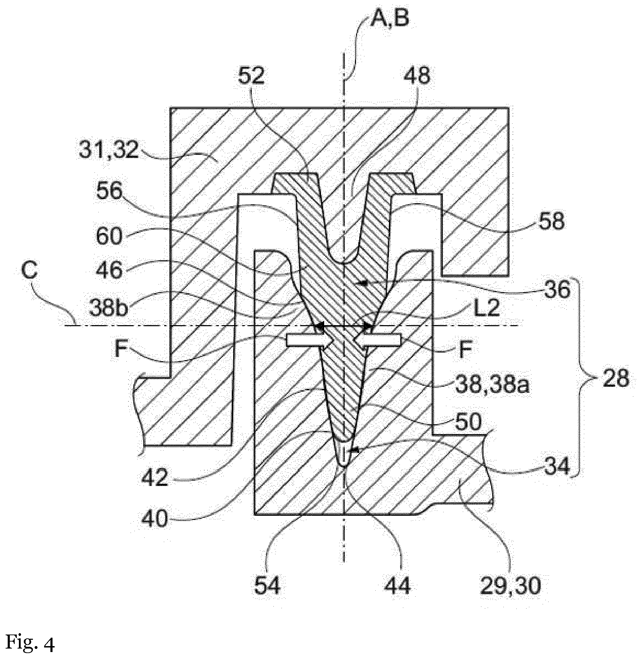

Tel qu'illustré sur la figure 4, par le rapprochement des boîtiers l'un vers l'autre et par la pression exercée par le ou les bossages 38, une force F est exercée contre l'une et/ou les faces de contact 56, 58 du capuchon 50, entraînant la déformation du capuchon 50. En effet, une partie de la matière composant le capuchon 50 est repoussée par le ou les bossages 38 dans la zone de la rainure 34 située entre le ou les sommets du ou des bossages 38 et la bouche d'entrée 46 de la rainure 34, formant un bourrelet 60. La surface de contact entre le capuchon 50 et la face interne 40 délimitant la rainure 34 est augmentée au niveau de ce bourrelet 60, optimisant l'effet d'étanchéité au niveau de ce bourrelet 60.

On comprend de ce qui précède que la déformation du capuchon 50 réalisée par au moins une force F est exercée dès lors que la face de contact 56 du capuchon entre en contact avec le ou les bossages 38. Lors du montage des boîtiers l'un sur l'autre, la déformation du capuchon 50 se produit avant que l'extrémité 54 du capuchon 50 n'entre en contact avec le fond de la rainure 44.

Une fois les boîtiers correctement positionnés et fixés l'un à l'autre, le bourrelet 60 du capuchon 50 accumulée dans la zone de la rainure 34 située entre le ou les sommets du ou des bossages 38 et la bouche d'entrée 46 de la rainure 34 demeure dans cette zone, tandis que l'extrémité 54 du capuchon 50 est en regard du fond de rainure 44, augmentant ainsi le niveau d'étanchéité du dispositif d'étanchéité 28.

Tel qu'illustré sur la figure 4, la nervure 36 présente une deuxième largeur L2 réduite par rapport à la première largeur L1, par appui d'au moins un des bossages 38 de la rainure 34, cette largeur étant mesurée dans le plan de coupe Q représenté sur la figure 1 et 2. En d'autres termes, une dimension de la nervure 36 mesurée à une hauteur choisie au niveau de la partie située entre l'extrémité 54 du capuchon 50 et le bourrelet 60 est réduite par appui du ou des bossages 38 comparativement à une dimension mesurée à la même hauteur lorsque la nervure 36 ne coopère pas avec la rainure 34, c'est-à-dire avant l'installation du deuxième boîtier 4 sur le premier boîtier 2. La ou les forces F exercées par le ou les bossages 38 sur les faces de contact 56, 58 du capuchon 50 affinent le capuchon 50 au niveau de la zone située entre l'extrémité 54 du capuchon 50 et le bourrelet 60, tout en élargissant le bourrelet 60. Pour rappel, une hauteur est mesurée le long du premier axe A ou de l'axe de rotation B, alors qu'une largeur est mesurée le long d'un axe perpendiculaire au premier axe A ou à l'axe de rotation B et s'étendant dans le plan de coupe Q illustré sur la figure 1 et 2.

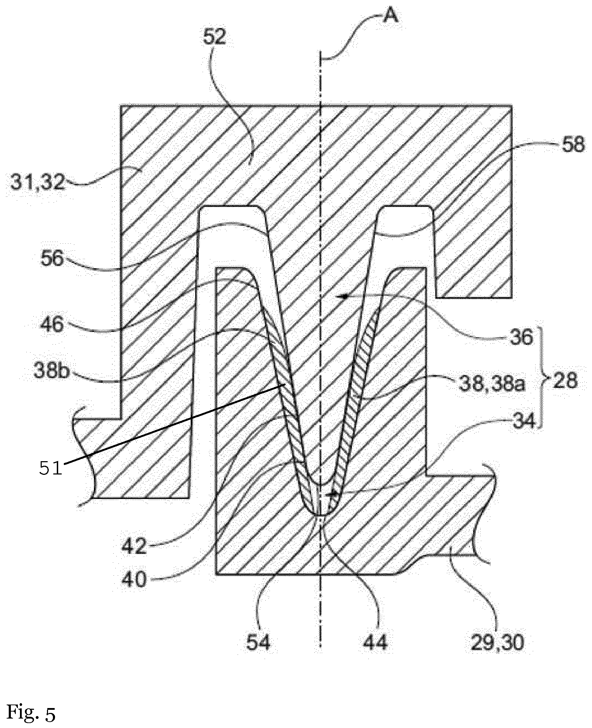

Tel qu'illustré sur la figure 5 et selon un mode de réalisation ne faisant pas partie de l'invention, la face interne 40 de la rainure 34 est couverte d'un matériau élastiquement déformable au niveau d'au moins un bossage 38. Le premier bossage 38a et le deuxième bossage 38b sont formés par une couche 51 de matériau élastiquement déformable.

La nervure 36 quant à elle est avantageusement composée du même matériau que celui du deuxième boîtier et/ou du premier boîtier. On comprend qu'au moins un bossage 38 est formé par une couche 51 de matériau élastiquement déformable. Dans ce mode de réalisation, c'est la couche 51 qui est déformée lors de la coopération entre la nervure 36 et la rainure 36, alors que dans le premier mode de réalisation c'est le capuchon. C'est ainsi la déformation de la couche 51 qui augmente la surface de contact entre la nervure 36 et la rainure 36 et optimise l'étanchéité entre les deux boîtiers 2, 4.

Lors du montage des boîtiers l'un avec l'autre, la nervure 36 s'enfonce dans la rainure 34, et c'est le bossage 38 qui se déforme lors de cette insertion. En effet, une partie de la matière du bossage 38 s'accumule dans le fond de rainure 44 par le mouvement de la nervure 36. Une fois les boîtiers mis en place, les faces de contact 56, 58 de la nervure 36 seront en contact de chacun des flancs d'appui 42 de la rainure 34 et du ou des bossages 38 déformés et assurent ainsi l'étanchéité au niveau de cette jonction.

## Revendications

1. Système de ventilation (1) comprenant au moins un premier boîtier (2) et un deuxième boîtier (4) coopérant avec le premier boîtier (2) pour délimiter un volume interne (6) du système de ventilation (1), ce dernier comprenant au moins dispositif d'étanchéité (28) entre le premier boîtier (2) et le deuxième boîtier (4), l'un quelconque du premier ou du deuxième boîtier (2,4) est porteur d'un moteur de ventilation d'un organe de ventilation (24) constitutif du système de ventilation, de chauffage et/ou d'air conditionné (1), au moins l'un des boîtiers (2, 4) comprend une paroi (29, 31) présentant un bord périphérique (30) qui délimite au moins une rainure (34) constitutive du dispositif d'étanchéité (28), le bord périphérique (30) comprend au moins un bossage (38) s'étendant vers l'intérieur de la rainure (34), le premier boîtier (2) comprenant la rainure (34), **caractérisé en ce que** le deuxième boîtier (4) comprend une paroi (29, 31) présentant un flanc périphérique (32) duquel fait saillie une nervure (36) configurée pour se loger dans la rainure (34) du premier boîtier (2), la nervure (36) présentant une première largeur (L1) mesurée le long d'une ligne de référence (C) quand la nervure (36) est hors de la rainure (34), ladite nervure (36) présentant une seconde largeur (L2) mesurée le long de la même ligne de référence (C) quand la nervure (36) est disposée dans la rainure (34), la seconde largeur (L2) étant inférieure à la première largeur (L1) par appui dudit au moins bossage (38).

2. Système de ventilation (1) selon la revendication 1, dans lequel le bord périphérique (30) comprend un premier bossage (38a) et un deuxième bossage (38b) s'étendant vers l'intérieur de la rainure (34) et l'un en direction de l'autre.

3. Système de ventilation (1) selon la revendication 1 ou 2, dans lequel la nervure (36) comprend au moins partiellement un matériau élastiquement déformable.

4. Système de ventilation (1) selon la revendication précédente, dans lequel la nervure (36) comprend au moins une tétine (48) issue de matière avec le deuxième boîtier (4), la matière du deuxième boîtier présentant un module de Young supérieur à celui du matériau élastiquement déformable.

5. Système de ventilation (1) selon l'une quelconque des revendications 3 ou 4, dans lequel la nervure (36) est intégralement composée d'un matériau élastiquement déformable.

6. Véhicule comprenant un système de ventilation (1) selon l'une quelconque des revendications précédentes, le système de ventilation (1) étant configuré pour traiter thermiquement un flux d'air envoyer vers l'habitacle et/ou vers un composant du véhicule dans le but de refroidir ou de chauffer l'habitacle et/ou le composant du véhicule.

## Patentansprüche

1. Lüftungsanlage (1), welche mindestens ein erstes Gehäuse (2) und ein zweites Gehäuse (4), das mit dem ersten Gehäuse (2) zusammenwirkt, um ein Innenvolumen (6) der Lüftungsanlage (1) zu begrenzen, umfasst, wobei diese Letztere mindestens eine Vorrichtung zur Abdichtung (28) zwischen dem ersten Gehäuse (2) und dem zweiten Gehäuse (4) umfasst, wobei ein beliebiges von dem ersten und dem zweiten Gehäuse (2, 4) einen Lüftungsmotor eines Lüftungsorgans (24) trägt, das Bestandteil der Lüftungs-, Heizungs- und/oder Klimaanlage (1) ist, wobei mindestens eines der Gehäuse (2, 4) eine Wand (29, 31) umfasst, die einen Umfangsrand (30) aufweist, welcher mindestens eine Rille (34) begrenzt, die Bestandteil der Abdichtungsvorrichtung (28) ist, wobei der Umfangsrand (30) mindestens eine Erhebung (38) umfasst, die sich in Richtung des Inneren der Rille (34) erstreckt, wobei das erste Gehäuse (2) die Rille (34) umfasst,
**dadurch gekennzeichnet, dass** das zweite Gehäuse (4) eine Wand (29, 31) umfasst, die eine umlaufende Flanke (32) aufweist, von der eine Rippe (36) vorsteht, die dafür ausgelegt ist, in der Rille (34) des ersten Gehäuses (2) aufgenommen zu werden, wobei die Rippe (36) eine entlang einer Bezugslinie (C) gemessene erste Breite (L1) aufweist, wenn sich die Rippe (36) außerhalb der Rille (34) befindet, wobei die Rippe (36) eine entlang derselben Bezugslinie (C) gemessene zweite Breite (L2) aufweist, wenn die Rippe (36) in der Rille (34) angeordnet ist, wobei die zweite Breite (L2) durch den Druck der mindestens einen Erhebung (38) kleiner als die erste Breite (L1) ist.

2. Lüftungsanlage (1) nach Anspruch 1, wobei der Umfangsrand (30) eine erste Erhebung (38a) und eine zweite Erhebung (38b) umfasst, die sich in Richtung des Inneren der Rille (34) und zueinander hin erstrecken.

3. Lüftungsanlage (1) nach Anspruch 1 oder 2, wobei die Rippe (36) wenigstens teilweise ein elastisch verformbares Material umfasst.

4. Lüftungsanlage (1) nach dem vorhergehenden Anspruch, wobei die Rippe (36) mindestens einen Nippel (48) umfasst, der mit dem zweiten Gehäuse (4) stoffschlüssig verbunden ist, wobei das Material des zweiten Gehäuses einen Elastizitätsmodul aufweist, der größer als derjenige des elastisch verformbaren Materials ist.

5. Lüftungsanlage (1) nach einem der Ansprüche 3 oder 4, wobei die Rippe (36) vollständig aus einem elastisch verformbaren Material besteht.

6. Fahrzeug, welches eine Lüftungsanlage (1) nach einem der vorhergehenden Ansprüche umfasst, wobei die Lüftungsanlage (1) dafür ausgelegt ist, einen Luftstrom thermisch zu behandeln, der zum Fahrzeuginnenraum und/oder zu einer Komponente des Fahrzeugs geleitet wird, zu dem Zweck, den Fahrzeuginnenraum und/oder die Komponente des Fahrzeugs zu kühlen oder zu erwärmen.

## Claims

1. Ventilation system (1) comprising at least one first housing (2) and one second housing (4) cooperating with the first housing (2) to delimit an internal volume (6) of the ventilation system (1), the latter comprising at least one sealing device (28) between the first housing (2) and the second housing (4), either one of the first or second housing (2, 4) bears a ventilation motor of a ventilation member (24) that is a constituent of the ventilation, heating and/or air conditioned system (1), at least one of the housings (2, 4) comprises a wall (29, 31) having a peripheral edge (30) which delimits at least one groove (34) that is a constituent of the sealing device (28), the peripheral edge (30) comprises at least one boss (38) extending towards the interior of the groove (34),
the first housing (2) comprising the groove (34), **characterized in that** the second housing (4) comprises a wall (29, 31) having a peripheral flank (32) from which protrudes a rib (36) configured to be housed in the groove (34) of the first housing (2), the rib (36) having a first width (L1) measured along a line of reference (C) when the rib (36) is out of the groove (34), said rib (36) having a second width (L2) measured along the same line of reference (C) when the rib (36) is disposed in the groove (34), the second width (L2) being less than the first width (L1) by the pressure of said at least one boss (38) .

2. Ventilation system (1) according to Claim 1, wherein the peripheral edge (30) comprises a first boss (38a) and a second boss (38b) extending towards the interior of the groove (34) and extending towards one another.

3. Ventilation system (1) according to Claim 1 or 2, wherein the rib (36) at least partially comprises an elastically deformable material.

4. Ventilation system (1) according to the preceding claim, wherein the rib (36) comprises at least one nipple (48) made of a piece with the second housing (4), the material of the second housing having a Young's modulus greater than that of the elastically deformable material.

5. Ventilation system (1) according to either one of Claims 3 and 4, wherein the rib (36) is entirely composed of an elastically deformable material.

6. Vehicle comprising a ventilation system (1) according to any one of the preceding claims, the ventilation system (1) being configured to thermally treat an airstream sent to the vehicle interior and/or to a component of the vehicle in order to cool or heat the vehicle interior and/or the component of the vehicle.
